# DEMANDE DE BREVET EUROPEEN

(11) **EP 1 111 646 A1**
(43) Date de publication de la demande: **27.06.2001**
(21) Numéro de dépôt: 00420260.2
(22) Date de dépôt: 18.12.2000
(51) Int. Cl.: H01H 85/20, H02B 1/18

(54) **Connecteur de raccordement et ensemble de raccordement électrique entre un jeu de barres et au moins un câble conducteur**

(30) Priorité: 20.12.1999 FR 9916110
(71) Demandeur: MECELEC INDUSTRIES, F-07300 Tournon sur Rhône (FR)
(72) Inventeur: Labrot, Jean-Mary, 75009 Paris (FR); Sage, Michel, 07300 Tournon-sur-Rhône (FR)
(74) Mandataire: Myon, Gérard Jean-Pierre

(57) **Abrégé**

Ce connecteur s'étend principalement selon une direction (Y-Y') globalement perpendiculaire à une première direction (X-X') selon laquelle s'étendent les barres (1-4). Il est pourvu de moyens (102, 103) de réception et de raccordement d'un fusible (51-54) ou d'un barreau conducteur (54). Ces moyens (102, 103) sont positionnes (π₁-π₄) de telle sorte qu'un axe médian (Δ₁-Δ₄) du fusible (51, 53) ou barreau conducteur (54) reçu dans ces moyens (102, 103) est décalé (δ), parallèlement à la première direction (X-X'), par rapport à un plan longitudinal médian (P₁-P₄) du connecteur (31-34).

## Description

L'invention a trait à un connecteur de raccordement électrique d'un conducteur à une barre d'un système à barres et à un ensemble de raccordement électrique entre un jeu de barres et au moins un câble conducteur.

Un tel ensemble de raccordement électrique peut être utilisé dans une armoire de raccordement, par exemple, dans une armoire de répartition de courant entre plusieurs habitations, situées dans une rue ou dans un immeuble ou pour relier entre eux plusieurs réseaux, en vue de l'inter-connexion des transformateurs utilisés pour la distribution d'énergie afin de permettre, par exemple, des opérations de maintenance sur l'un ou plusieurs de ces transformateurs.

Un tel ensemble de raccordement est connu, notamment, de FR-A-2 715 775 et comprend des connecteurs prévus pour être disposés au voisinage les uns des autres en étant raccordés sur des barres d'un système à barres. Chaque connecteur s'étend selon une direction globalement perpendiculaire à la direction des barres et reçoit l'extrémité d'un conducteur qu'il permet de relier à la barre sur laquelle il est raccordé.

Par FR-A-2 731 847, il est connu de réaliser un système de branchement protégé sur un dispositif de raccordement électrique du type précité qui comprend un étrier ou mâchoire fixé sur une barre et prévu pour recevoir une borne d'un fusible dont l'autre borne est reçue dans un second étrier ou mâchoire, lui-même raccordé à un conducteur.

La largeur dévolue au branchement des quatre conducteurs d'un câble sur un système tétrapolaire à barres est de l'ordre de 200 mm car on utilise généralement deux modules adjacents, de largeur unitaire égale à environ 100 mm, du dispositif connu. Compte tenu de ce que des nervures de faible épaisseur sont disposées entre les emplacements de réception des connecteurs, la largeur de l'emplacement dévolu à chaque connecteur est légèrement inférieure à 50 mm. Or, pour certaines applications, des fusibles de taille importante doivent être utilisés afin de permettre le contrôle de courants d'intensité importante. Ainsi, les normes actuellement en vigueur prévoient une largeur de 52 mm pour un fusible de taille 1, c'est-à-dire contrôlant un courant jusqu'à 315 ampères, et de 60 mm pour un fusible de taille 2, c'est-à-dire contrôlant un courant jusqu'à 500 ampères. Avec une telle largeur pour les fusibles, il n'est pas possible de juxtaposer quatre fusibles dans une largeur inférieure à 200 mm.

C'est à ces inconvénients qu'entend plus particulièrement remédier l'invention en proposant un nouveau connecteur compatible avec le système connu de FR-A-2 715 775 et qui permet de recevoir un fusible de largeur importante, sans remettre en cause le pas d'écartement des zones de raccordement sur les barres du système à barres.

Dans cet esprit, l'invention concerne un connecteur de raccordement électrique d'un conducteur et une barre d'un système à barres dans lequel plusieurs barres s'étendent parallèlement les unes aux autres selon une première direction alors que le connecteur s'étend principalement selon une seconde direction globalement perpendiculaire à la première direction, le connecteur étant pourvu de moyens de réception et de raccordement d'un fusible ou d'un barreau conducteur, caractérisé en ce que ces moyens de réception et de raccordement sont positionnés de telle sorte qu'un axe médian du fusible ou barreau conducteur reçu dans ces moyens est décalé, parallèlement à la première direction, par rapport à un plan longitudinal médian du connecteur.

Grâce à l'invention, le décalage obtenu entre l'axe médian du fusible ou du barreau et le plan longitudinal du connecteur permet d'escamoter le fusible vers l'intérieur du connecteur à partir d'un côté de celui-ci qui jouxte un connecteur voisin ou une nervure du système à barres et de repousser ce fusible d'un côté du connecteur où l'encombrement est moins critique, en particulier du côté du neutre où est utilisé un barreau conducteur étroit.

Selon des aspects avantageux mais non obligatoires de l'invention, le connecteur incorpore une ou plusieurs des caractéristiques suivantes :
- Il comprend une enveloppe d'isolation électrique des moyens de réception et de raccordement, cette enveloppe étant en retrait par rapport à un côté d'une base du connecteur. Cette enveloppe permet de définir un logement latéral de réception partielle d'un fusible appartenant à un connecteur voisin. Dans ce cas, on peut prévoir que la partie en retrait de l'enveloppe est apte à être disposée en regard d'un fusible d'un connecteur voisin raccordé sur une barre voisine.
- Il comprend des moyens de fixation sur la barre dans deux positions décalées selon la seconde direction.
- Il comprend une semelle conductrice apte à être raccordée électriquement à la barre et formant âme pour le connecteur. Cette semelle est pourvue de deux orifices de passage d'une vis de fixation sur la barre, ces deux orifices étant sensiblement alignés dans le plan médian du connecteur. Ceci permet d'obtenir deux positions de montage du connecteur sur la barre, décalées perpendiculairement à la direction des barres.
- Les moyens de réception et de raccordement sont formés par une mâchoire amont connectée à la barre et une mâchoire aval connectée à un dispositif de réception et de raccordement du conducteur, ces mâchoires définissant un plan, dans lequel est inclus l'axe médian du fusible ou barreau conducteur reçu dans ces mâchoires, globalement parallèle et décalé par rapport au plan médian du connecteur.
- Il est pourvu de moyens de raccordement provisoire d'un second conducteur.

L'invention concerne également un ensemble de raccordement électrique entre le jeu de barres et au moins un câble électrique qui comprend au moins un connecteur tel que précédemment décrit. Un tel ensemble de raccordement peut être compact, y compris lorsque sont utilisés des fusibles avec un pouvoir de coupure important. Selon des variantes de réalisation, le décalage de l'axe médian du fusible ou du barreau par rapport au plan longitudinal des connecteurs peut être constant ou variable, notamment progressif, entre les connecteurs raccordés aux différentes barres.

L'invention sera mieux comprise et d'autres avantages de celle-ci apparaîtront plus clairement à la lumière de la description qui va suivre d'un mode de réalisation d'un connecteur et d'un ensemble de raccordement conformes à son principe, donnée uniquement à titre d'exemple et faite en référence aux dessins annexés dans lesquels :
- la figure 1 est une vue de face, partielle, d'un ensemble de raccordement électrique conforme à l'invention ;
- la figure 2 est une coupe selon la ligne II-II à la figure 1 ;
- la figure 3 est une coupe selon la ligne III-III à la figure 1 ;
- la figure 4 est une vue en perspective du connecteur représenté à la figure 2 et de la barre à laquelle il est associé et
- la figure 5 est une coupe de principe selon la ligne V-V à la figure 1.

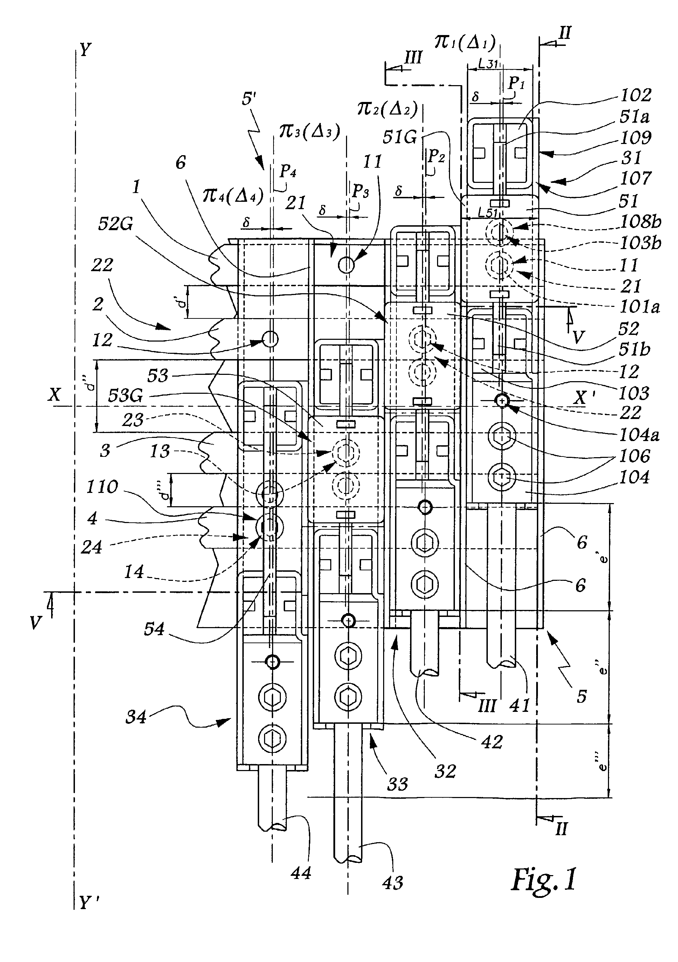

A la figure 1, trois barres, respectivement référencées 1, 2 et 3 véhiculent les phases d'un courant triphasé. Une quatrième barre 4 est reliée au neutre. Les barres 1 à 4 sont disposées parallèlement les unes aux autres, selon une direction X-X', et forment une structure étagée sous plusieurs modules dont deux sont représentés avec les références 5 et 5', ces modules pouvant être du type connu de FR-A-2 715 775.

Chaque barre 1 à 4 est pourvue au niveau de chaque module 5, d'un orifice 11, 12, 13, 14 autour duquel est ménagée une zone 21, 21, 23 ou 24 de raccordement d'un connecteur 31, 32, 33 ou 34. Chaque connecteur 31 à 34 est de forme globalement allongée et s'étend selon une direction globalement perpendiculaire à la direction X-X'.

On note P₁ le plan longitudinal médian du connecteur 31. Ce plan est globalement perpendiculaire à la direction X-X' et à la surface supérieure de la barre 1 sur laquelle est définie la zone 21. Ce plan est sensiblement équidistant des bords latéraux du connecteur 31. De la même manière, on note respectivement P₂, P₃ et P₄ les plans longitudinaux des connecteurs 32, 33 et 34. Les plans P₁ à P₄ sont parallèles entre eux et à une direction Y-Y' globalement perpendiculaire à la direction X-X'. Les connecteurs 31 à 34 sont répartis sur la largeur des deux modules 5 et 5' visibles à la figure 1 entre des nervures 6 et 6'.

Les connecteurs 31 à 34 sont identiques. Ils permettent chacun de relier à l'une des barres 1 à 4, un conducteur 41 à 44 appartenant à un câble électrique d'alimentation d'un site d'utilisation en courant triphasé.

Chaque connecteur 31 à 33 est équipé d'un fusible 51, 52 ou 53, alors que le connecteur 34 est équipé d'un barreau conducteur 54.

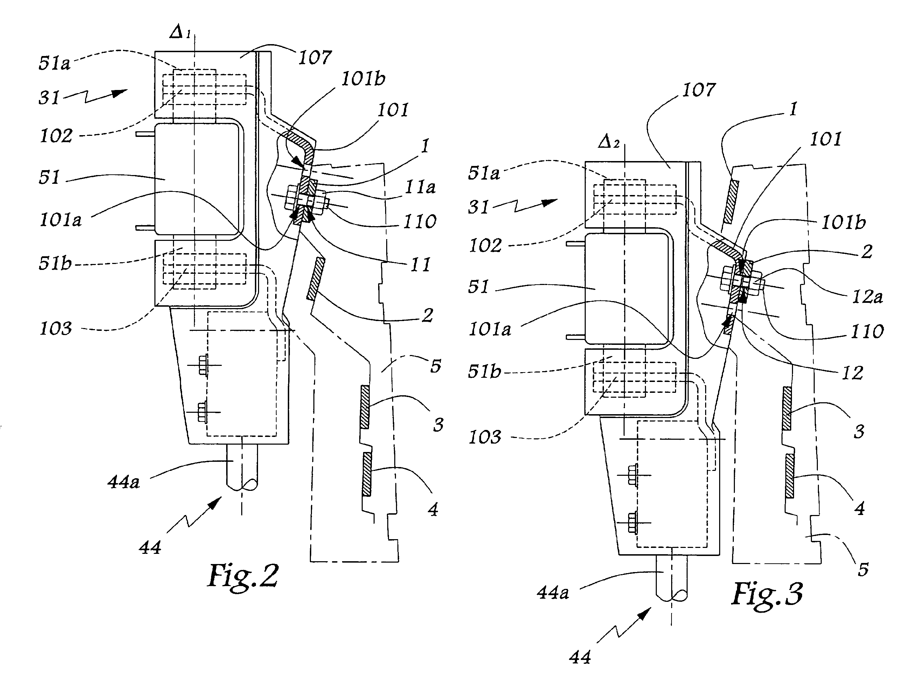

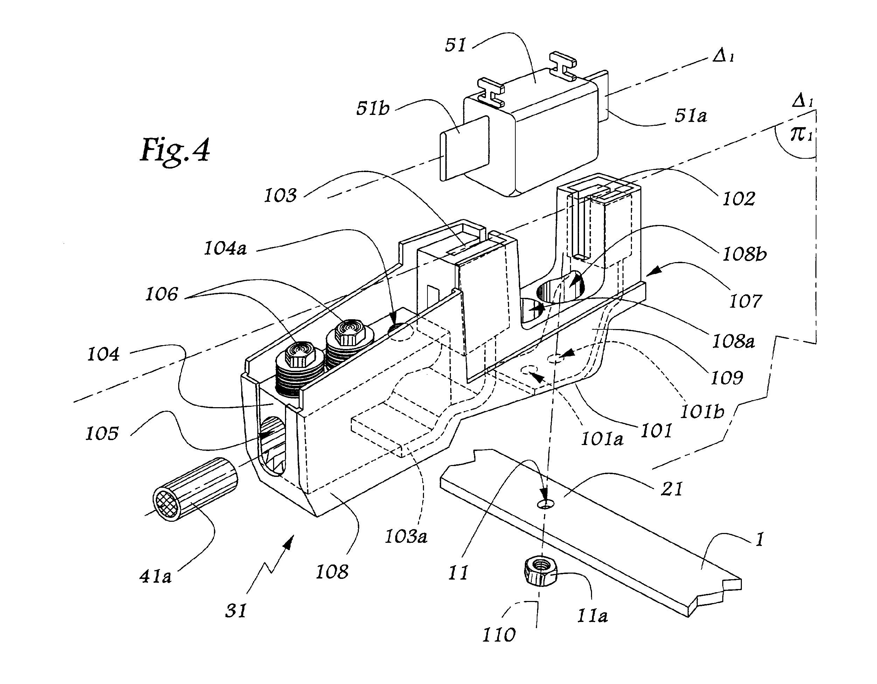

Le connecteur 31 est plus particulièrement visible aux figures 2 et 4. Il comprend une semelle 101 en matériau électriquement conducteur, par exemple en métal, formant âme pour le connecteur. Cette semelle supporte une mâchoire amont 102 prévue pour recevoir la borne amont 51a du fusible 51. Une mâchoire aval 103 est prévue pour recevoir la borne aval 51b du fusible 51.

On note π₁ un plan du connecteur 31 perpendiculaire à la barre 11 défini comme étant un plan passant par les centres respectifs des mâchoires 102 et 103. On note Δ₁ l'axe médian du fusible 51 qui passe par les bornes 51a et 51b. Lorsque le fusible 51 est en place dans le connecteur 31 en étant immobilisé par les mâchoires 102 et 103, l'axe Δ₁ est inclus dans le plan π₁.

La mâchoire 103 se prolonge par une patte 103a qui est en contact avec une pièce massique 104 dans laquelle est défini un logement 105 de réception de l'extrémité 41a du conducteur. La pièce 104 et le logement 105 sont centrés sur le plan P₁. Des vis 106 sont prévues pour l'immobilisation de l'extrémité 41a du conducteur 41 dans la pièce 104, cette partie du dispositif pouvant être conforme à FR-A-2 670 614.

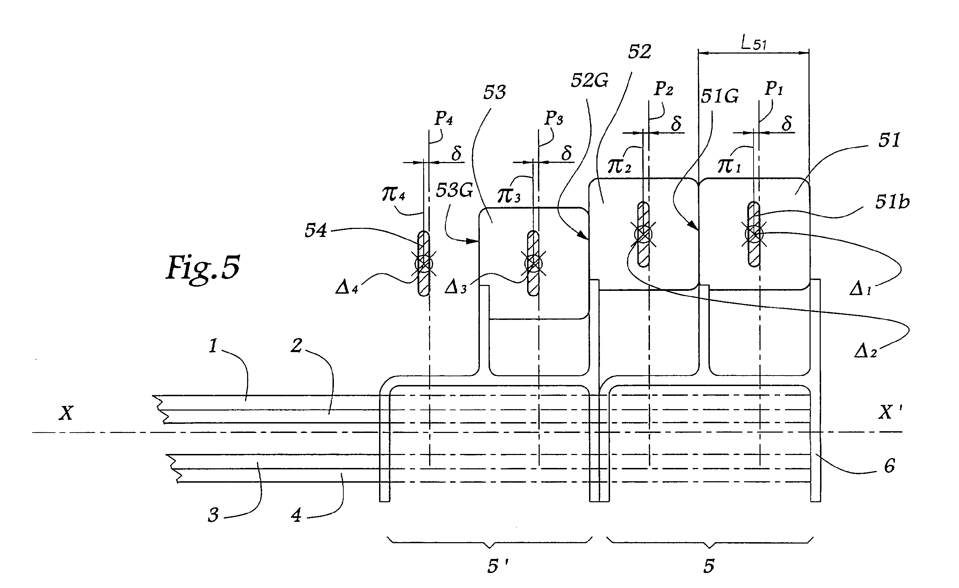

Conformément à l'invention, les plans P₁ et π₁ sont décalés parallèlement à la direction X-X'. Ainsi, l'axe Δ₁ est décalé parallèlement au plan P₁ lorsque le fusible 51 est en place dans les mâchoires 102 et 103. Plus précisément, le plan π₁ est situé sur la gauche du plan P₁ aux figures 1 et 5 et l'on note δ l'écart entre ces plans qui est alors le décalage entre l'axe Δ₁ et le plan P₁. Grâce à ce décalage, le fusible 51 ne dépasse pas sur la droite du connecteur 31 aux figures 1 et 5, alors qu'il dépasse sur la gauche de ce connecteur. Comme il ne dépasse pas sur la droite du connecteur 31, le fusible 51 n'interfère pas avec la nervure 6 bien qu'il ait une largeur L₅₁ supérieure à la largeur L₃₁ du connecteur 31. En effet, l'écart δ est supérieur ou égal à la moitié de la différence des largeurs L₅₁ et L₃₁.

En revanche, le fusible 51 dépasse sur la gauche du connecteur 31 à la figure 1. Chaque connecteur 31 à 34 est pourvu d'une dépression latérale 107 ménagée dans son enveloppe isolante externe 108. Plus précisément, au niveau des mâchoires 102 et 103, l'enveloppe isolante 108 du connecteur 31 est décalée vers l'intérieur par rapport à la partie de base 109 du connecteur 31. De même en est-il pour les connecteurs 32 à 34. Ainsi, la partie 51G du fusible 51 qui dépasse de la base 109 du connecteur 31, sur la gauche de celui-ci, comme représenté à la figure 1, est disposée au niveau de la dépression 107 de l'enveloppe du connecteur 32 voisin, à la hauteur de la mâchoire amont 102 de ce connecteur 32. En d'autres termes, la partie 51G du fusible 51 peut venir au-dessus de la partie de base 109 du connecteur 32 sans pour autant heurter ou contraindre la partie supérieure de ce connecteur.

De la même manière, une partie 52G du fusible 52 dépasse, sur la gauche du connecteur 32 à la figure 1, sans pour autant interférer avec le connecteur 33 car ce connecteur est pourvu d'une dépression latérale 107. Enfin, une partie 53G du fusible 53 dépasse sur la gauche du connecteur 33 à la figure 1 et ne risque pas d'interférer avec un fusible voisin puisque seul le barreau 54, qui est notablement moins large que les fusibles, est utilisé avec le connecteur 34.

On note respectivement π₂, π₃ et π₄ les plans médians des mâchoires de chacun des connecteurs 32 à 34. Comme précédemment, ces plans sont respectivement décalés sur la gauche par rapport aux plans P₂, P₃ et P₄, parallèlement à la direction X-X' à la figure 1. On note respectivement Δ₂, Δ₃ et Δ₄ les axes médians des fusibles 52 et 53 et du barreau 54. En position des éléments 52 à 54 dans les mâchoires des connecteurs 32 à 34, les axes Δ₂ à Δ₄ sont respectivement inclus dans les plans π₂ à π₄.

Compte tenu de la répartition spatiale des plans π₁ à π₄ par rapport aux plans P₁ à P₄, les axes Δ₁ à Δ₄ sont décalés de la valeur de l'écart δ lorsque les éléments 51 à 54 sont en place dans les connecteurs 31 à 34. La largeur totale des quatre connecteurs 31 à 34 équipés des éléments 51 à 54 et raccordés sur les barres 1 à 4 peut ainsi être conservée à une valeur conforme à la largeur usuelle des modules 5 et équivalents.

Pour permettre une implantation dense des connecteurs 31 et 32, sans interférence entre les fusibles 51 et 52, les connecteurs 31 et 32 sont également décalés parallèlement à la direction Y-Y'. Pour ce faire, les barres 1 et 2 sont décalées d'une distance d' selon la direction Y-Y' et chacun des connecteurs 31 à 34 peut être monté sur une barre 1 à 4 dans deux positions définies par deux perçages 101a et 101b ménagés dans la semelle 101 de chaque connecteur. Des orifices 108a et 108b sont respectivement prévus dans l'enveloppe isolante 108 au niveau de ces perçages afin de permettre la mise en place d'une vis de blocage 110 destinée à pénétrer dans l'un des orifices 11 à 14 et à coopérer avec un écrou prisonnier, tel que représenté aux figures 2 et 3, respectivement avec la référence 11a et 12a.

Le connecteur 31 est raccordé en utilisant le perçage 101a de la semelle 101, de sorte que le connecteur 31 est décalé vers le haut des figures 1 ou 2. A l'inverse, et comme il ressort de la figure 3, le perçage 101b est utilisé pour le raccordement du connecteur 32, de telle sorte que le connecteur 32 est en comparaison, déplacé vers le bas des figures 1 ou 3. Il en résulte que les fusibles 51 et 52 sont décalés d'un écart e', parallèlement à la direction Y-Y', sensiblement supérieur à la distance d'. Ceci est suffisant pour éviter une interférence entre ces fusibles, et ce, alors que la distance d' entre les barres 1 et 2 est relativement faible.

La distance d' ' entre les barres 2 et 3 est plus importante, de telle sorte qu'un écart e' ' est obtenu en permanence entre les fusibles 52 et 53, parallèlement à la direction Y-Y', en utilisant les mêmes perçages 101b pour les connecteurs 32 et 33.

Le décalage e''' des connecteurs 33 et 34, parallèlement à la direction Y-Y', n'est pas essentiel, pour autant qu'un barreau conducteur 54 est utilisé, car le fusible 53 peut être situé au niveau d'un tel barreau sans risque d'interférence. Bien entendu, si un fusible est utilisé sur le connecteur de neutre, notamment pour certaines applications particulières, on utilisera avantageusement le perçage 101a de la semelle 101 pour le connecteur 33 et le perçage 101b de la semelle 101 pour le connecteur 34 afin d'obtenir un décalage adapté des fusibles parallèlement à la direction Y-Y' en tenant compte du fait que la distance d ' ' ' entre les barres 3 et 4 est analogue à la distance d' entre les barres 1 et 2.

La pièce 104 est pourvue d'un taraudage 104a permettant le vissage éventuel d'un connecteur de raccordement provisoire d'un second conducteur sur la pièce 104. Un tel taraudage 104a est prévu sur chacun des connecteurs 31 à 34, comme cela ressort de la figure 1, de telle sorte qu'un branchement provisoire peut être réalisé, en parallèle de celui des conducteurs 41 à 44, par exemple pour une opération de maintenance ou pour l'alimentation d'un site d'utilisation temporaire tel qu'un manège de forain ou un chantier.

Selon une variante non représentée de l'invention, la semelle 101 d'un connecteur peut ne pas s'étendre jusqu'à la barre sur laquelle est raccordé ce connecteur, une entretoise conductrice étant alors disposée entre cette semelle et cette barre, autour de la vis de fixation. Les différentes entretoises peuvent avoir des hauteurs variables tenant compte du caractère étagé des barres 1 à 4, les semelles 101 étant pliées avec des angles variables, de telle sorte que les faces d'introduction des fusibles dans les connecteurs 31 à 34 sont globalement coplanaires dans un plan perpendiculaire aux plans médians P₁ à P₄ de ces connecteurs. Les fusibles sont ainsi globalement coplanaires parallèlement aux barres 1 à 4, ce qui en facilite l'accès à ces fusibles sans augmenter notablement la profondeur totale du système.

La juxtaposition des connecteurs 31 à 34 permet d'éviter une mise en rotation accidentel de l'un d'entre eux lors du serrage ou du desserrage d'une vis 106 d'immobilisation d'un conducteur car les connecteurs voisins bloquent ce connecteur en pivotement autour de son axe de fixation sur la barre correspondante qui est matérialisé par la vis de blocage 110.

Pour résister aux efforts subis par chaque connecteur du fait de la manoeuvre du fusible ou du barreau qu'il reçoit, on peut prévoir, sur les côtés de chaque connecteur, des nervures et gorges aptes à coopérer avec des nervures et gorges d'un connecteur voisin pour solidariser les connecteurs entre eux. Ainsi, les connecteurs voisins absorbent partiellement les efforts d'arrachement ou d'écrasement subis par un connecteur lors de la manoeuvre du fusible ou du barreau.

Comme il ressort plus clairement de la figure 5, le décalage δ entre les plan π₁ et P₁, π₂ et P₂ et équivalents est sensiblement constant pour les quatre connecteurs 31 à 34 qui sont identiques.

Selon une variante non représentée de l'invention, on peut prévoir que ce décalage est variable, par exemple de plus en plus important, ce qui permet d'obtenir un décalage de plus en plus important des fusibles sur la gauche de la figure 1 en partant du fusible 51 et en allant jusqu'au fusible 53. Ceci peut être envisagé dans la mesure où le barreau conducteur 54 est notablement plus étroit que les fusibles 51 à 53.

## Revendications

1. Connecteur de raccordement électrique d'un conducteur (41-44) à une barre (1-4) d'un système à barres dans lequel plusieurs barres s'étendent parallèlement les unes aux autres selon une première direction (X-X') alors que ledit connecteur s'étend principalement selon une seconde direction (Y-Y') globalement perpendiculaire à ladite première direction, ledit connecteur étant pourvu de moyens (102, 103) de réception et de raccordement d'un fusible (51-53) ou d'un barreau conducteur (54), caractérisé en ce que lesdits moyens (102, 103) de réception et de raccordement sont positionnés de telle sorte qu'un axe médian (Δ₁-Δ₄) dudit fusible ou barreau conducteur reçu dans lesdits moyens est décalé (δ), parallèlement à ladite première direction (X-X'), par rapport à un plan longitudinal médian (P₁-P₄) dudit connecteur (31-34).

2. Connecteur selon la revendication 1, caractérisé en ce qu'il comprend une enveloppe (108) d'isolation électrique desdits moyens (102, 103) de réception et de raccordement, ladite enveloppe étant en retrait (107) par rapport à un côté d'une base (109) dudit connecteur.

3. Connecteur selon la revendication 2, caractérisé en ce que la partie en retrait (107) de ladite enveloppe est apte à être disposée en regard d'un fusible (51-53) d'un connecteur voisin (31-33) raccordé sur une barre voisine (1-3).

4. Connecteur selon l'une des revendications précédentes, caractérisé en ce qu'il comprend des moyens (101a, 101b, 110) de fixation sur ladite barre (1-4) dans deux positions décalées selon ladite seconde direction (Y-Y').

5. Connecteur selon l'une des revendications précédentes, caractérisé en ce qu'il comprend une semelle conductrice (101) apte à être raccordée électriquement à ladite barre (1-4) et formant âme pour ledit connecteur (31-34), ladite semelle (101) étant pourvue de deux orifices (101a, 101b) de passage d'une vis (110) de fixation sur ladite barre (1-4), lesdits deux orifices étant sensiblement alignés dans le plan médian (P₁-P₄) dudit connecteur (31-34).

6. Connecteur selon l'une des revendications précédentes, caractérisé en ce que lesdits moyens de réception et de raccordement sont formés par une mâchoire amont (102) connectée à ladite barre (1-4) et une mâchoire aval (103) connectée à un dispositif (104) de réception et de raccordement dudit conducteur (41-44), lesdites mâchoires définissant un plan (π₁-π₄), dans lequel est reçu ledit axe médian (Δ₁-Δ₄) dudit fusible (51-53) ou barreau conducteur (54), globalement parallèle et décalé (δ) par rapport audit plan médian (P₁-P₄) dudit connecteur (31-34).

7. Connecteur selon l'une des revendications précédentes, caractérisé en ce qu'il est pourvu de moyens (104a) de raccordement provisoire d'un second conducteur.

8. Ensemble de raccordement électrique entre un jeu de barres (1-4) et au moins un câble conducteur (41-44), caractérisé en ce qu'il comprend au moins un connecteur (31-34) selon l'une des revendications précédentes.

9. Ensemble de raccordement selon la revendication 8, caractérisé en ce que le décalage (δ) de l'axe médian (Δ₁-Δ₄) des fusibles (51-53) ou barreau conducteur (54) par rapport à l'axe longitudinal (P₁-P₄) desdits connecteurs (31-34) est constant entre les connecteurs raccordés aux différentes barres (1-4).

10. Ensemble de raccordement selon la revendication 8, caractérisé en ce que le décalage de l'axe médian des fusibles (51-53) ou barreau conducteur (54) par rapport au plan longitudinal des connecteurs (31-34) est variable, notamment progressif, entre les connecteurs raccordés aux différentes barres (1-4).
